# EUROPEAN PATENT APPLICATION

(11) **EP 1 591 816 A1**
(43) Date of publication of application: **02.11.2005**
(21) Application number: 05252522.7
(22) Date of filing: 22.04.2005
(51) Int. Cl.: G02B 6/44

(54) **Cables and cable installations**

(30) Priority: 28.04.2004 US 833876
(71) Applicant: Corning Incorporated, Corning, NY 14831 (US)
(72) Inventor: Evans, Alan Frank, Beaver Dams, New York 14812 (US)
(74) Representative: Boon, Graham Anthony

(57) **Abstract**

The invention provides a cable having a core comprising at least one transmission element (3) selected from the group consisting of optical fibers, electric conductors and tensile elements. A jacket (11) comprising polymeric material encloses the core, and at least one monitoring optical fiber (12) is embedded within said jacket. The jacket (11) is sufficiently opaque for said monitoring optical fiber (12) to be substantially invisible to an observer looking at the outside of the jacket (11). In use, a source of optical signal is coupled to one end of the monitoring fiber (12) and a detector for the optical signal is coupled to the other end of said fiber. The detector thus gives warning of damage; for example, an attempt to eavesdrop on a signal being transmitted by optical fibers in the core of the cable may be detected in time for the transmission of sensitive information to be stopped and the attempt foiled.

## Description

### BACKGROUND OF THE INVENTION

### FIELD OF THE INVENTION

The present invention relates generally to cables and to installations incorporating cables. Its main application is expected to be in relation to optical cables for the transmission of confidential information and it will be described primarily in that context, but it is also applicable to metallic cables for data and voice transmission, to electric cables that may be at risk of theft or vandalism, and even tensile cables supporting bridges, temporary or permanent buildings, or other structures that might be at risk of malicious or negligent damage, including terrorist attack. It may also be used to detect accidental damage or damage caused by environmental conditions, including for instance damage by rodents or termites.

### TECHNICAL BACKGROUND

Most cables include a jacket of a tough polymeric material to protect from corrosive or otherwise harmful environmental hazards and/or from impact damage. Commonly used jacketing polymers include polyethylene, in some cases crosslinked (PE or XLPE), polyvinyl chloride (PVC), ethylene/propylene copolymer and -terpolymer elastomers (EPR), ethylenevinyl acetate copolymers (EVA), butyl rubber, polychloroprene (PCP), chlorosulphonated polyethylene (CSP) and polyamide (nylon). With a few exceptions, the polymeric material is either inherently cloudy (polyethylene, in the thicknesses used for jacketing any but rather small cables) or filled with carbon black and/or mineral fillers that make the jacket opaque.

Optical cables are now used for almost all long-distance communication links, and in the nature of such links they may pass through areas where they may be accessible to those who might wish to eavesdrop on the transmitted data for the purpose of governmental or "industrial" espionage or to facilitate criminal acts of various kinds. A long optical cable link, if accessible, may not be too difficult to tap without detection; for example, if the signal level is high, a sufficient signal may sometimes be extracted by "microbending" the fiber carrying the data without the reduction in intensity at the receiving end of the fiber becoming obvious; or a more sophisticated eavesdropper might induce a cable breakdown and install a tap (possibly incorporating an optical amplifier to compensate losses) downstream of the fault before it can be repaired by the operator of the installation.

This invention seeks to provide an immediate alarm indicative of any tampering with the cable to which it is applied so that, for example, the transmission of sensitive data can be suspended and an investigation undertaken before the perpetrator can get access to the interior of the cable. Some forms of the invention will give an indication of the location at which tampering is suspected.

### SUMMARY OF THE INVENTION

One aspect of the invention is a cable comprising:
a core comprising at least one transmission element selected from the group consisting of optical fibers, electric conductors and tensile elements;
a jacket comprising polymeric material enclosing said core; and
at least one monitoring optical fiber embedded within said jacket;
said jacket being sufficiently opaque for said monitoring optical fiber to be substantially invisible to an observer looking at the outside of the jacket.

The monitoring optical fiber (or each of them) may be fully embedded within the thickness of the jacket, or it may be embedded in the inner surface of the jacket, provided it is sufficiently bonded to the material of the jacket that it will fracture or significantly deform if the surrounding jacket is cut.

Preferably the characteristics of the fiber and the jacket are such that the fiber will also fracture or significantly deform in the event that the jacket is attacked with a solvent or other chemical agent or by heating.

To protect the monitoring fiber, or each of the monitoring fibers, from fracture or damage in ordinary bending of the cable, it should preferably extend along the cable in a generally helical or undulating path, not longitudinally. A single fiber may be adequate, for example if applied helically with a short lay length (comparable with or less than the diameter of the jacket), but in most cases a plurality of fibers distributed around the circumference of the cable will be preferred.

The monitoring fiber, or each of them, may be of the same quality as optical fibers used for data transmission, but lesser quality will mostly be acceptable; for example, multimode fibers will usually be entirely satisfactory, or the invention may provide an application for optical fibers that may have failed to meet their manufacturing specification or have suffered minor damage subsequently, and which would otherwise have to be scrapped. The core and cladding of the optical fiber can be either plastic or glass. However, the optical attenuation or loss of the monitoring fiber must be sufficiently low to get a monitor signal throughout the entire span of cable being monitored. This sets a practical total loss limit of approximately 90 dB. The low loss of glass fibers make them applicable to cables of any practical length whereas the high loss of plastic fibers limits the cable length to approximately 3 km.

In use, an optical signal (which could be as simple as continuous illumination from any light source including one or more wavelengths within the transmission window of the fiber), is to be injected into the embedded fiber (or at least one of them) at one end of the cable and detected after it has passed through the length of that fiber, and so in another aspect, the present invention includes a cable installation comprising the cable described; a source of optical signal coupled to one end of said fiber; and a detector for the said optical signal coupled to the other end of said fiber.

The detector may be located close to the end of the fiber remote from the one end to which the signal is injected, that is at the opposite end of the cable; but it may be more convenient for the source and detector to be at the same end of the cable. This is possible even with a single fiber by using a reflector at the opposite end, provided the nature of the signal and the characteristics of the reflector and the detector allow a signal returned from the reflector to be distinguished from one reflected from a broken end face of the fiber. For example:
(a) the signal might be pulsed and the detector responsive to a change in its transit time, as more fully explained in the next paragraph;
(b) the reflector might include an amplifier, the detector being responsive to a reduction in intensity;
(c) the reflector might include a modulator, the detector being responsive to loss of modulation; or
(d) the signal might include components of different wavelength between which the reflector would be selective, the detector being responsive to a change in the relative intensities of the different wavelengths.
It is usually preferable, however, to use separate fibers for the two directions of transmission of the signal. Subject to the effect of losses, the signal may pass back and forth through a plurality of fibers before being detected.

In one technically advantageous (but relatively expensive) form of the invention, however, the optical signal comprises individual spaced pulses. A small portion of the pulse energy is reflected throughout the fiber via distributed Rayleigh scattering and the detector observes the strength of the reflected pulse energy as a function of its transit time; a reduction in energy indicates the occurrence of tampering (or accidental damage) and measurement of the transit time gives a good estimate of its position. This will be recognized as an application of optical time-domain reflectometry (OTDR). Where the cost of installed OTDR instruments is not justifiable, a portable one may be deployed following detection of a fiber break by a simpler detector.

In an installation in accordance with the invention for the transmission of confidential information, it is preferable for the monitoring fiber detector(s) to be at the transmitting end, so that no auxiliary transmission link is needed to enable the output of the detector to be applied to cause suspension of transmission.

Preferably the detector in such applications of the invention includes automatic means for suspending transmission of some or all of the transmission channels in the event it ceases to detect the optical signal expected from the embedded fiber, or from any one of plural embedded fibers.

In all cases, and independently of such automatic suspending means when applicable, the detector preferably includes an alarm for drawing attention of installation supervisors to any loss of or unexpected change in the optical signal from the embedded fiber, or from any one of plural embedded fibers.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

### BRIEF DESCRIPTION OF THE DRAWINGS

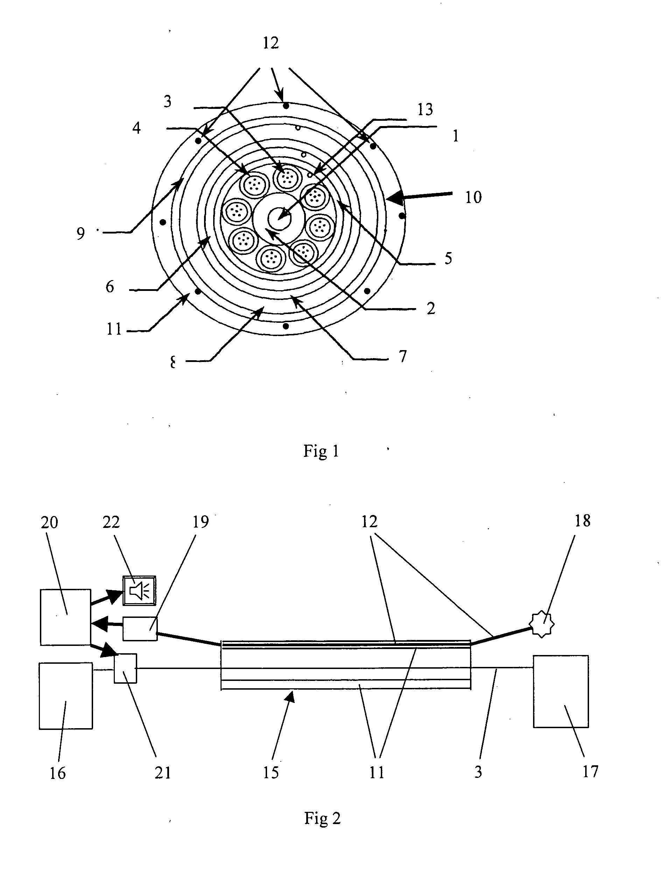

Figure 1 is a diagrammatic cross-sectional view of one embodiment of the cable of present invention; and
Each of Figures 2-8 is a diagrammatic representation of a different embodiment of a cable installation in accordance with the invention.

### DETAILED DESCRIPTION OF THE PREFERRED EMBODIMENTS

Reference will now be made in detail to the present preferred embodiments of the invention, examples of which are illustrated in the accompanying drawings. Whenever possible, the same reference numerals will be used throughout the drawings to refer to the same or like parts.

One embodiment of the cable of the present invention is shown in **Figure 1**, and comprises, generally in order from the center outwards, a tensile member 1 (typically a resin-bonded structural glass fiber rod or a metal wire or wire strand), a plurality of groups of optical data transmission fibers 3, each group enclosed in an individual buffer tube 4, optional sheath strength elements 5, an inner jacket (also called a bedding layer) 6, an inner steel tape or wire armor layer 7, an intermediate jacket 8, and an outer steel armor layer 9. These components together constitute the core 10 of the cable and are described only in outline, since the core structure is not significant for the invention. The core is surrounded by an outer jacket 11 which is visually opaque, preferably black, and constitutes the jacket proper in relation to the invention which must be penetrated to get access to any part of the core; and in accordance with the invention, this jacket has embedded in it a sufficient number of optical fibers 12 for tamper sensing purposes to ensure that there is minimal risk that an opening sufficiently large to enable the cable to be tapped can be made through the jacket without breaking or damaging at least one of these invisible fibers. The fibers 11 extend in an undulating or helical path, rather than in a longitudinal straight line, so as to protect them from tensile stresses when the cable is bent. As illustrated, the cable also includes a rip cord 13 to facilitate stripping of outer layers for cable termination and jointing.

Preferably the sensor fibers 12 are susceptible to damage by heat or by solvents or other chemical agents that might be utilized in an attempt to penetrate the cable jacket without cutting it, so that such attempt would cause the optical signal to be lost or significantly changed. For example, the fibers may be glass fibers with a very thin cladding layer, or no glass cladding layer at all, and a light-transmitting polymeric buffer layer into which at least one transmission mode extends; preferably such a buffer layer is based on similar polymer to that forming the base of the cable jacket material, to ensure similar susceptibility to chemical agents.

In the case of a cable having more than one jacket layer, the monitor fibers may be embedded in any one (or if desired more than one) of them; positioning in the outermost jacket has the advantage of earliest detection, but may risk alarms due to relatively minor accidental damage; positioning in an inner layer may be easier for manufacture and subjects the fibers to lower stresses when the cable is bent.

In a specific example of a cable in accordance with Figure 1, the outer jacket 11 is composed of medium density polyethylene and has a diameter of three quarters of an inch (19mm) and a wall thickness of a tenth of an inch (2.5mm). Embedded about half way through its wall thickness are eight silica-glass based multimode optical fibers (12) each with a core diameter of 50 micrometers, cladding diameter of 125 micrometers and polymer coating diameter of 250 micrometers. They are uniformly spaced about the circumference and applied with a helical lay length of 4 inches (100mm), reversing in direction every 40 inches (1m). The steel armor (7 and 9) is corrugated for ease of handling and rip cords provide access to the transmission fibers in the field. The central tensile member (1) is a glass reinforced plastic, fiberglass rod. The transmission fibers (3) are deployed in loose tube construction with twelve fibers per buffer tube and eight tubes per cable in this example.

Figure 2 shows a conceptually simple form of the invention comprising a single length of cable 15 extending between a data transmitter 16 and a receiver 17. The cable provides a number of transmission optical fibers 3 (only one of which is shown) sufficient to provide the required transmission capacity and at least one of them (the one illustrated) may transmit confidential data. In accordance with the invention, the jacket 11 of the cable embeds at least one monitor optical fiber 12 which is illuminated by an optical signal source 18, in this case located with the receiver 17. A detector 19 located with the transmitter 16 observes the optical signal transmitted by the monitor fiber 12. The detector provides input to a computer 20 or other circuitry (which may be entirely conventional) so as to turn off an optical switch 21 controlling the input to the illustrated transmission fiber and sound or otherwise activate an alarm 22, both in the event that the signal received at the detector from the monitor fiber disappears or significantly changes in character.

The optical signal source 18 could be a light-emitting diode, a laser, or even an incandescent lamp or a gas-discharge lamp, each with or without means for modulating to provide a pulsating signal, with or without data significance. Alternatively (with the advantage, in some circumstances, of not requiring electrical power), it might be a source of amplified spontaneous emission (ASE), especially (but not exclusively) out-of-band ASE filtered from the output of an optical amplifier serving the data transmission of the installation. The detector will usually be a photodetector diode.

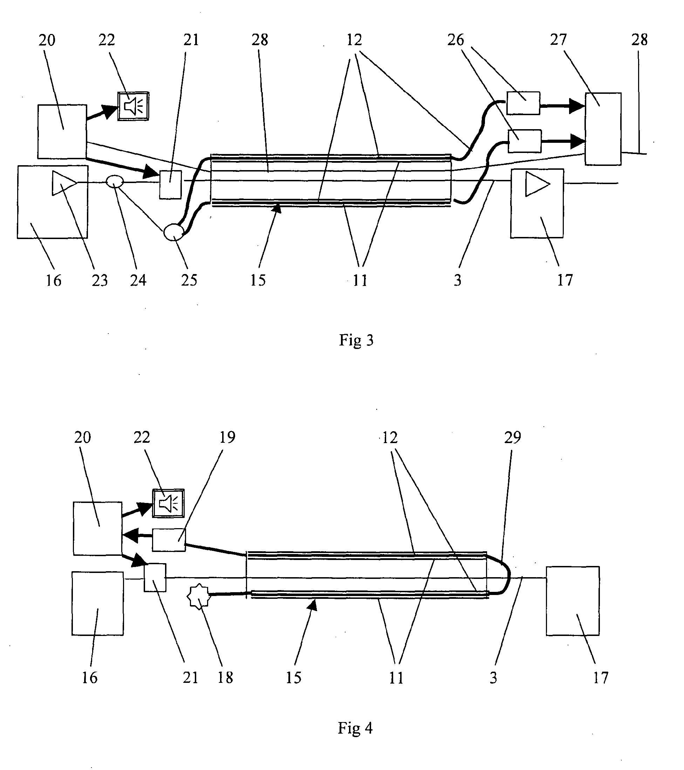

Figure 3 shows the invention applied to a cable installation of such length as to require amplification at one or more than one intermediate point, and illustrates a number of alternatives that may be used singly or in combination. The drawing shows the first section of the installation, so that transmitter 16 is the source of the signal, and receiver 17 is a repeater including at least an amplifier, and possibly a regenerator that improves the shape and/or timing of signal pulses, which will act as the transmitter for the next section. Subsequent sections will be substantially the same, except for the omission of components 20-22, as will become clear.

Transmitter 16 includes an optical amplifier 23 and in consequence its output will include, in addition to the desired signal, amplified spontaneous emission radiation. In this form of the invention, this radiation is exploited as a light source: a wavelength selective filter 24 (for example a comb filter if the signal is wavelength-division multiplexed) separates some of this for supply to at least one monitor optical fiber while passing the signal wavelength(s). As shown, the separated light is subdivided by an optical splitter 25 to feed a plurality (e.g. two) of sensor fibers 12. Each of these fibers has, at the other end of the section, an individual detector 26, and all of these are connected to a logic device 27 which sends a signal to the computer 20 *via* a pilot signaling fiber 28 to indicate the loss of signal from any one of the sensor fibers. Logic device 27 also relays to the computer 20 the corresponding signal(s) from the other section(s) of the installation. Computer 20 functions as before to turn off the optical switch 21 and activate the alarm 22.

If desired, the individual detectors 26 could be replaced by an optical coupler and a single detector, though that would demand a more sophisticated detector as the signal would only diminish proportionally in case of damage to only one of the fibers.

Figure 4 shows another embodiment of the invention, which is substantially identical with that of Figure 2 except that the light source 18 and the detector 19 are at the same end of the cable, an optical connection through two monitor fibers 12 being completed by a fiber loop 29.

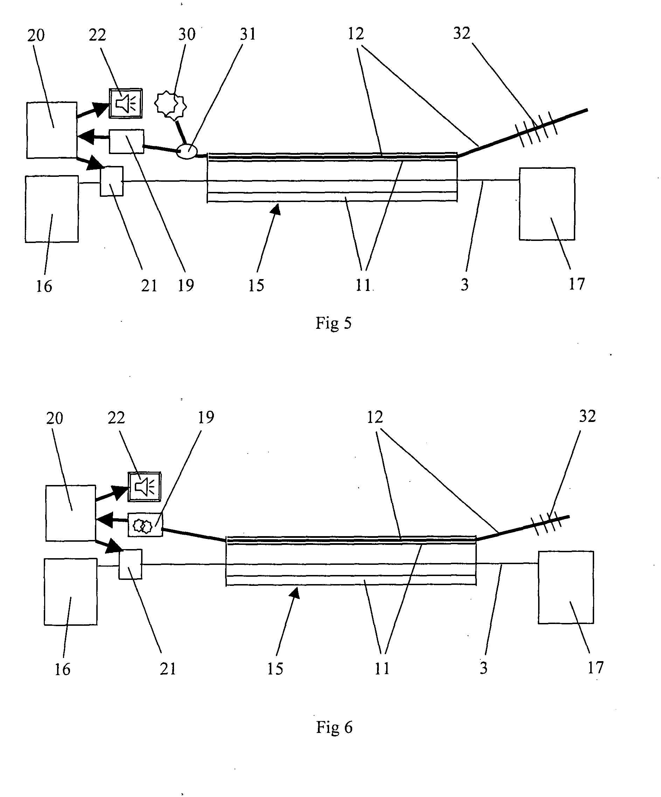

Figure 5 shows another embodiment of the invention but in this case a dual-wavelength light source 30 (for example a pair of simple laser diodes) is located at the same end of the cable as the detector 19 and coupled to the monitor fiber by a circulator 31 (or a coupler could be used, with additional losses), and at the other end of the cable the monitor fiber is terminated in a reflector 32 that selectively reflects light of a chosen one of the two wavelengths, so that on loss of continuity - even if due to a fracture close to the transmitter end that happens to form a good reflecting surface - the relative intensities of the two wavelengths returning to the detector will change markedly. The detector is responsive to this change in ratio (and preferably also to loss of total intensity, in case of a substantially non-reflecting fracture). The selective reflector 32 may for example be a fiber Bragg grating as illustrated or a multilayer reflector (etalon).

Figure 6 represents another embodiment of the invention in which the detector 19 is an OTDR instrument. It includes a pulsed light source (for example a laser operating in pulse mode or any continuous light source pulsed by a modulator) and a detector responsive to the transit time from launch of the signal to its return after distributed Rayleigh scattering reflection. The instrument functions in its usual way to observe reflected intensity as a function of time from launch and in the event of a change not only provides an alarm indication but also provides an estimate of the position along the length of the cable at which interference or damage appears to have occurred, so facilitating the apprehension of those responsible and/or repair. This is an expensive form of the invention, but if a reflector 32 is provided at the remote end of the sensor fiber (which is otherwise optional), it becomes possible to use a much simplified instrument which is programmed to launch pulses and to detect reflections only in a short time interval from launch in which they will occur if the installation is in an undamaged condition; if a fiber is broken or seriously damaged, no pulse will be detected in that time interval, even if a broken fiber end happens to reflect efficiently and return a pulse at an earlier time. It will be apparent that this simplified instrument will not indicate the position of broken or damaged fiber end, but a portable OTDR instrument can be connected to the monitor fiber if and when a need to do so arises.

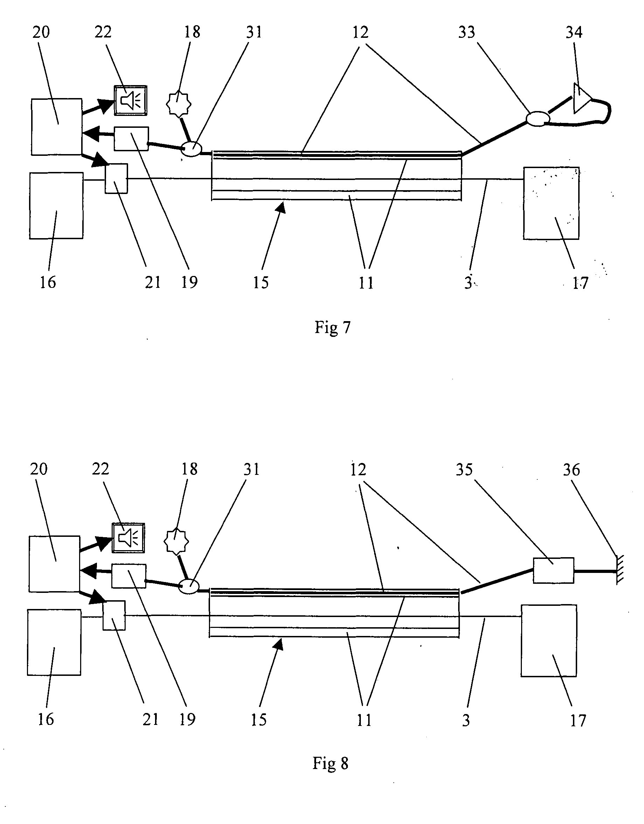

Figure 7 shows another variant embodiment of the invention in which light source 18 and detector 19 are coupled to the same end of the monitor fiber 12 by an optical circulator 31, while at the other end a further circulator (or a splitter-coupler) 33 enables light to be returned by a fiber loop incorporating an optical amplifier 34, for example an erbium-doped fiber amplifier or a semiconductor optical amplifier. The circulator 33 and fiber loop may equally be replaced by a semiconductor optical amplifier operating in reflection mode or a bi-directional erbium-doped fiber amplifier and reflector. In either case, the gain of the optical amplifier should be sufficiently high for the returned signal reaching detector 19 to be more intense than could arise from reflection of the source light from a highly reflecting fiber break, however close to the transmitter end of the monitor fiber. The detector 19 in this case only needs to distinguish these two levels.

Figure 8 shows still another variant form of the invention which is similar to that of Figure 7 except that the monitor fiber is connected at the receiver end of the installation to an optical modulator 35 and any suitable reflector 36 (or a reflective modulator could be used). The detector 19 in this case needs to discriminate between modulated and continuous radiation.

It will be apparent to those skilled in the art that various modifications and variations can be made to the present invention without departing from the spirit and scope of the invention. Thus it is intended that the present invention cover the modifications and variations of this invention provided they come within the scope of the appended claims and their equivalents.

Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was expressed in a printed publication, nor that it was available to the public or to experts in the art to which the invention relates in the US or in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

## Claims

1. A cable comprising:
a core comprising at least one transmission element selected from the group consisting of optical fibers, electric conductors and load-bearing members;
a jacket comprising polymeric material enclosing said core; and
at least one monitoring optical fiber integrated with said jacket and disposed so as to undergo change if the integrity of the outer jacket is compromised;
said jacket being sufficiently opaque for said monitoring optical fiber to be substantially invisible to an observer looking at the outside of said jacket.

2. A cable as claimed in claim 1 wherein said monitoring optical fiber is fully embedded within the thickness of said jacket

3. A cable as claimed in claim 1 wherein said monitoring optical fiber is embedded in an inner surface of said jacket and is sufficiently bonded to said jacket that it will undergo change selected from fracture and significant deformation if the embedding said jacket is cut.

4. A cable as claimed in claim 1 wherein a plurality of said monitoring optical fibers are distributed around the circumference of the cable.

5. A cable installation comprising:
a cable comprising:
a core comprising at least one transmission element selected from the group consisting of optical fibers, electric conductors and load-bearing members;
a jacket comprising polymeric material enclosing said core; and
at least one monitoring optical fiber integrated with said jacket and disposed so as to undergo change if the integrity of the outer jacket is compromised;
said jacket being sufficiently opaque for said monitoring optical fiber to be substantially invisible to an observer looking at the outside of the jacket;
a source of optical signal coupled to one end of said monitoring optical fiber;
and a detector for the said optical signal coupled to the other end of said monitoring optical fiber.

6. A cable installation as claimed in claim 5 wherein said source generates light of a first wavelength and a second wavelength and wherein said source and said detector are at the same end of the cable and coupled to a monitoring optical single fiber with a reflector at the opposite end of the cable, said reflector being adapted to reflect only said first wavelength and the detector being responsive to a change in the relative intensities of the reflected light of the first wavelength and the light of the second wavelength that is reflected from a broken end face of the monitoring optical fiber.

7. A cable installation as claimed in claim 6 in which the signal is pulsed and the detector responsive to a change in its transit time and measures a change in transit time to estimate the position of damage.

8. A cable installation as claimed in claim 6 in which said reflector includes an amplifier, said detector being responsive to a reduction in intensity.

9. A cable installation as claimed in claim 6 in which said reflector includes a modulator, said detector being responsive to a loss of modulation.

10. A cable installation as claimed in claim 5 for transmission of confidential information in which said detector includes automatic means for suspending transmission of at least one transmission channel in the event it ceases to detect the optical signal expected from a said monitoring optical fiber.
